# EUROPEAN PATENT APPLICATION

(11) **EP 2 083 567 A2**
(43) Date of publication of application: **29.07.2009**
(21) Application number: 08253700.2
(22) Date of filing: 12.11.2008
(51) Int. Cl.: H04N 5/913

(54) **Recording apparatus and recording method**

(30) Priority: 28.01.2008 JP 2008015742
(71) Applicant: Hitachi, Ltd., Chiyoda-ku Tokyo (JP)
(72) Inventor: Watanabe, Mitsunobu, Tokyo 100-8220 (JP); Tsuruga, Sadao, Tokyo 100-8220 (JP)
(74) Representative: Calderbank, Thomas Roger

(57) **Abstract**

A recording apparatus having a unit (101) to receive content data and copy-related information of the content data; a separation/extraction unit (103) to separate and extract the content data and the information; a writing unit (112) to divide the content data extracted by the separation/extraction unit into a plurality of data and write them in a first recording medium (113); an encryption key generation unit (120a) to generate an encryption key for encrypting each of the plurality of data; and a copy control information processing unit (111) to generate, from the copy-related information and the generated encryption key, a plurality of pieces of content protection management information for the plurality of pieces of data, wherein when the content data written into the first recording media is recorded into a second recording media (114), the plurality of pieces of data are recorded before the plurality of pieces of content protection management information are recorded.

## Description

### BACKGROUND OF THE INVENTION

The present invention relates to a recording apparatus having a tuner for receiving digital television broadcasts.

For copyright protection of recorded content, removable recording media need to have security measures to prevent illicit copying. There is a copyright protection technology SAFIA (Security Architecture For Intelligent Attachment Drive), which in its rule requires that data to be recorded be divided into blocks of a specified replay time (e.g., less than one minute) and that the individual blocks be encrypted with different encryption keys as they are recorded.

In moving data between recording media, if the data is divided into N pieces as described above, a conventional technique first deletes a key K₁ of the first block from the original recording media and then copies K₁ to a destination media before copying data D1 of the first block. This operation repetitively performed on (Kᵢ, Dᵢ) for i=1 to N until the data is completely moved.

JP-A-2002-300517 discloses a technology which involves dividing one content file recorded in a media into sections of a specified, smaller size and moving them to a destination. When the move operation is interrupted by pressing a power button, the technology is characterized by adding EOB (End Of Bit) to the end of the content data being moved, interrupting the move operation after recording data up to one with the EOB and then resuming the move operation from the next data following the EOB.

However, the conventional technology has a problem that data being recorded is divided when the move operation is interrupted by a power shutdown such as power failure while data is moved between recording media. For example, if a power failure occurs when a key Kᵢ for a block i and data Di are being moved, there is a possibility that the data block Dᵢ may not be able to be recovered as a result of loss of the key Kᵢ. Particularly when the content is large in size, it takes a significant time to move the data, increasing a chance of occurrence of an interruption of the move operation.

Further, the technology of JP-A-2002-300517 is based on the assumption that an interruption of the move operation is caused by pressing the power button and thus has difficulty dealing with power shutdowns such as power failures.

Furthermore, if a limitation on the number of copies is imposed in the future, the data move operation based on the conventional technology will increase a possibility of the number of copies being reduced in the event of a power shutdown, degrading its usability from the standpoint of the user.

The present invention has been accomplished under the above circumstances and its objective is to provide a recording apparatus that will not easily interrupt a copy or move operation even in the event of a power shutdown and which has a good usability.

The recording apparatus of this invention comprises:
a receiving unit to receive content data and information related to a copying of the content data;
a separation/extraction unit to separate and extract the content data and the information related to the copying of the content data, both received by the receiving unit;
a writing unit to divide the content data extracted by the separation/extraction unit into a plurality of pieces of data and write them in a first recording medium;
an encryption key generation unit to generate an encryption key for encrypting each of the plurality of pieces of data; and
a copy control information processing unit to generate, from the information related to the copying and the generated encryption key, a plurality of pieces of content protection management information for the plurality of pieces of data;
wherein when the content data written into the first recording media is recorded into a second recording media, the plurality of pieces of data are recorded before the plurality of pieces of content protection management information are recorded.

This reduces a chance of the encryption key being lost during the copy operation in the event of power interruptions due to power failures.

According to the present invention, if a power interruption should occur during the copy or move operation, the copy or move operation will not easily be interrupted, improving the ease of use of the recording apparatus.

Other objects, features and advantages of the invention will become apparent from the following description of the embodiments of the invention taken in conjunction with the accompanying drawings.

In the drawings
Fig. 1 is a block diagram showing a configuration of an embodiment of a system of this invention.
Fig. 2 is a block diagram showing a configuration of an embodiment of a transmitter of this invention.
Fig. 3 illustrates an example structure of a descriptor for content use, one of copy control information pieces.
Fig. 4 illustrate an example of describing the content use descriptor in each field.
Fig. 5 illustrate an example structure of a digital copy control descriptor, one of copy control information pieces.
Fig. 6 illustrates an example of information to control copy generations.
Fig. 7 illustrates an reception operation by a receiver receiving each field of the content use descriptor transmitted by the transmitter.
Fig. 8 illustrates an example use of a program content protection by the transmitter using the copy control information.
Fig. 9 illustrates an example of control performed when the receiver accumulates (records) a program content by using the copy control information.
Fig. 10 is a block diagram showing an example configuration of a receiver 3 in the embodiment of this invention.
Fig. 11 illustrates an example operation of dividing data to be recorded by using a plurality of keys according to the embodiment of this invention.
Fig. 12 illustrates an example of a removable recording media capable of managing a plurality of copies according to the embodiment of this invention.
Fig. 13 illustrates an example of a preferred data structure in the removable recording media according to the embodiment of this invention.
Fig. 14 illustrates an example management of recorded content protection management information.
Fig. 15 is a schematic diagram showing recording media used during a copy operation.
Fig. 16 is a schematic diagram showing recording media used during a move operation.
Fig. 17 is a flow chart showing an example sequence of steps for preparing copy generation control information and the information on the number of copies that can be made when recording a program content whose first generation is allowed to be copied.
Fig. 18 is a flow chart showing an example sequence of steps for copying a program content.
Fig. 19 is a flow chart showing an example sequence of steps for moving a program content.
Fig. 20 is a flow chart schematically showing an example sequence of steps for diving data.
Fig. 21 is a flow chart that takes into account a measure to reduce a chance of interruption of a dubbing operation due to power failures.
Fig. 22 is a flow chart that takes into account a measure to reduce a chance of interruption of a move operation due to power failures.
Fig. 23 is a table showing a structure of content data with a commonly used encryption key.
Fig. 24 is a flow chart showing a sequence of steps for moving content data according to a conventional technology.
Fig. 25 schematically illustrates content data during the process of a move operation according to the conventional technology.

Now, preferred embodiments of this invention will be described by referring to the accompanying drawings. It is noted, however, that the present invention is not limited to these embodiments. Although the embodiments presented here concern a recording apparatus and are preferably applicable to it, the invention can also be applied to other than the recording apparatus. It should also be noted that not all of the constructions presented here as preferred embodiments do not need to be adopted but they can be selectively employed.

As digital television broadcasts (e.g., terrestrial digital television broadcasts and BS digital television broadcasts) have come into widespread use, television programs have come to be able to be digitally recorded. The digitally recorded videos of television programs are characterized by their being not degraded in quality if copied. So, digital television broadcast waves (simply referred to also as "broadcast waves") are attached with copy control information including a digital copy control signal (for example, "Copy One Generation" or "Copy Once" that permits only a first generation copy). With this copy control information, TV programs are currently allowed to be recorded for only a first generation copy and also the recorded content moved. However, there have been complaints that this copy control system is not useful for the user. In response to the complaints, the "Telecommunications Council", an advisory body to the Ministry of Internal Affairs, submitted a report on revising the copy once rule to the ministry on August 2, 2007. This report proposes a method that involves writing control information called a "content use descriptor" in addition to the currently used digital copy control signal and assigning to the "content use descriptor" a flag indicating that "there is a limitation on the number of copies allowed" so that, in a recording apparatus with a built-in hard disk drive (HDD) having a digital television broadcast tuner, a "Copy One Generation" broadcast program video (content) recorded in the HDD is allowed to be copied nine times and moved once (a "copy 9 times + move once" operation is hereinafter referred to as a "Copy 9" operation). In other words, if the "Copy One Generation" digital copy control signal is included in a broadcast wave and also the "limitation on the number of copies allowed" flag is contained in a content use descriptor, the proposed method allows the "Copy One Generation" TV program to be recorded in a HDD and then copied up to nine times and moved once.

In a recording apparatus with provisions described above, when content recorded in its internal HDD is copied to other recording media, it is desired in terms of usability that the content be able to be copied to removable recording media.

Removable recording media, however, need to take some security measures to prevent illegal copies from the standpoint of copyright protection of recorded content. That is, the recording media used preferably have a copyright protection measure that allows for managing the number of copies that can be made (the number of times that the content can be copied). One such recording media is an iVDR-S (Information Versatile Disk for Removable usage - secure), a removable HDD complying the copyright protection technology SAFIA (Security Architecture For Intelligent Attachment Drive). In the description that follows, an iVDR-S will be used as an example of the removable recording media with a security measure. The iVDR-S is also referred to simply as an "iVDR". The SAFIA specifies that when recording data in an iVRD, the data be divided into blocks of specified playback duration (e.g., within 1 minute) and encrypted with a different encryption key for each block.

If the report made by the "Telecommunication Council" is implemented, content recorded in an internal HDD, even "Copy One Generation" content, can be copied multiple times, so that a frequency of copy (so-called dubbing) increases significantly. Therefore, when copying or moving content data from the internal HDD to, for example, a removable HDD (here iVDR), it is necessary to take into account possible interruptions of the copy operation of content data due to a power shutdown as caused by a power failure.

Under the current copyright protection standard, once "Copy One Generation" content is recorded in, for example, an internal HDD, when the content is moved from the internal HDD to a removable iVDR, it is moved by using a move function. If during the process of executing the move function a power shutdown should occur resulting in an interruption of the move operation, the content data ends up being divided. This problem will be explained by referring to the accompanying figures.

Among technologies that interrupt a move operation as by pressing a power button and then resume the move operation from where it was interrupted, is JP-A-2002-300517. The JP-A-2002-300517 discloses a technique that, when moving one content file recorded in a recording media to a destination by dividing it into blocks of a specified smaller size, adds EOB (End Of Bit) to the end of a content data block being moved at time of interrupting the move operation as by pressing the power button, records data up to where the EOB is added, interrupts the move operation and then resumes the move operation from a data block immediately following the EOB. This technique, however, cannot deal with an interruption caused by a power interruption.

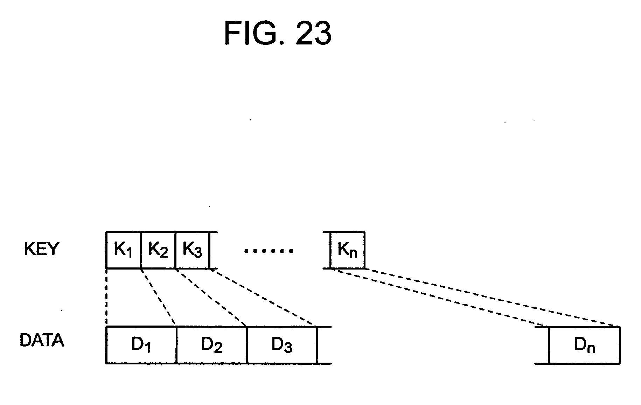

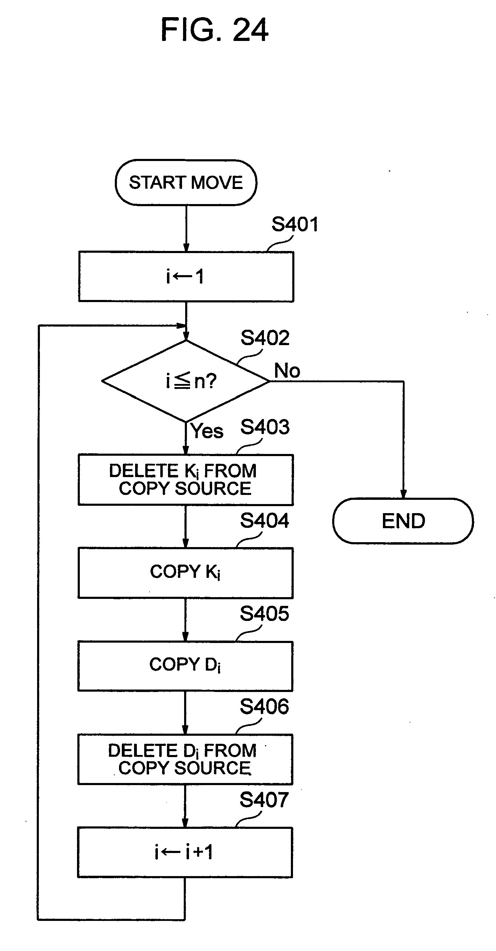

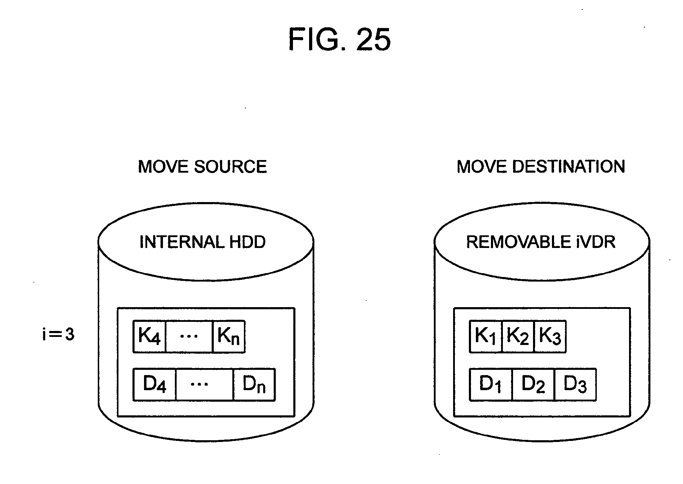

Fig. 23 shows a structure of content data with a commonly used encryption key. Fig. 24 is a flow chart showing a sequence of steps performed by a move operation for moving content data according to a conventional technology. Fig. 25 schematically illustrates content data being moved by the conventional technology.

In a move operation, conventional recording apparatus normally prevent illicit copying to enhance security by ensuring that the same data is allowed to exist both in a source media and in a destination media only for a predetermined duration of time (e.g., within one minute). That is, encrypted content data to be moved is, as shown in Fig. 23, divided into N blocks of data Di, each attached with a key Kᵢ to decrypt the individual encrypted data, and moved successively one data block at a time in the order of the key Kᵢ and data Dᵢ starting from i=1 to n.

Here, let us consider a case where content data is to be moved from an internal HDD to a removable iVDR. This operation is performed in a process shown in the flow diagram of Fig. 24.

In Fig. 24 when a move operation is started, a first step is to substitute 1 into I in step 401 (step is abbreviated "S") to initialize a counter. Next, a check is made as to whether last data has been reached (S402). If there still is data to be moved, a key Kᵢ is transferred from a source internal HDD to a memory not shown and is eliminated from the source internal HDD (S403). Then, the key Kᵢ in the memory is copied to a destination removable iVDR (S404) to copy a data block Di (S405), which is followed by the data block Dᵢ being eliminated from the source HDD (S406). This ensures that the duration of time in which the same data blocks with a key exist in both the source and destination can be kept to a short period (for example one minute, preferably less than 45 seconds considering variations). Next, i in the counter is incremented (S407) and the processing returns to S402 where the above process is repeated until there is no data to be copied.

Fig. 25 schematically illustrates a state when the move operation has proceeded to i=3. As can be seen from Fig. 25, data blocks D₁, D₂, D₃ and keys K₁, K₂, K₃ have been moved to the destination iVDR and, in the source internal HDD, the moved data blocks D₁, D₂, D₃ and keys K₁, K₂, K₃ are shown eliminated.

With this conventional moving method, there is a problem that an interruption of the move operation caused by some unexpected events (such as power failure) can result in recorded (video) data being divided. That is, data is split during the loop processing between the deletion of copy source key K₁ (S403) and the deletion of copy source data D_{N} (S406) in the flow chart of Fig. 24. For example, if a power failure occurs while the key Kᵢ and data Dᵢ of block i are moved, there is a possibility of the data block Dᵢ failing to be reproduced because of the loss of key Kᵢ. Particularly when the size of the content is large, the move operation takes a correspondingly large time, greatly increasing the chance of interruption of the move operation.

Further, if in the near future multiple copies (or copying two or more times) are allowed even for "Copy One Generation" content recorded in an internal HDD, the possibility of the copy operation being interrupted during the copying (or dubbing) from a copy source to a copy destination increases. In the event of a copy operation interruption, if multiple copies are permitted, it is of course possible to execute the copy operation again by using one of the remaining copy operations allowed. This, however, reduces the number of permitted copy operations, which is of course not desirable.

### <System>

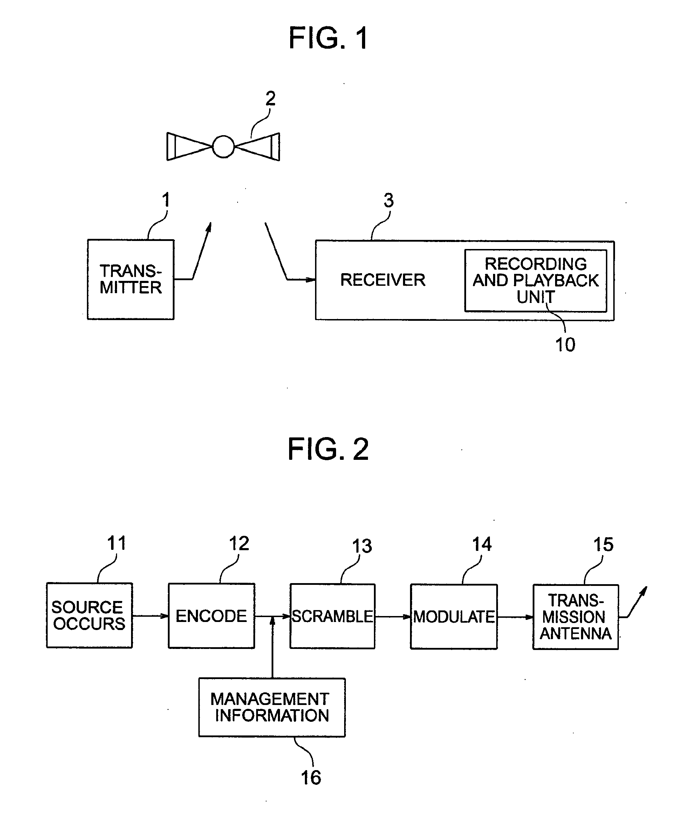

Fig. 1 is a block diagram showing an example configuration of a system in this embodiment. This represents a case where broadcast information is received and then recorded and played back.

In Fig. 1, reference number 1 represents a transmitter installed in an information dissemination station, such as broadcast station; 2 a relaying device installed in a relay station or broadcast satellite; 3 a receiver installed, for example, in a home of the user; and 10 a receiving, recording and playback unit incorporated in the receiver 3. The receiving, recording and playback unit 10 can record and play back broadcast information.

The transmitter 1 transmits modulated signal waves via the relaying device 2. The transmission may be implemented via cables, telephone lines and terrestrial broadcast waves. The signal wave received by the receiver 3, as described later, is demodulated into an information signal which is then processed into a signal suited for recording as required, before being recorded. The user, if the receiver 3 has a built-in display, can use this display and, if not, connect the receiver 3 to a display not shown to watch and listen to video and audio represented by the information signal.

### <Transmitter>

Fig. 2 is a block diagram showing an example configuration of the transmitter 1 in the system of Fig. 1.

In Fig. 2, denoted 11 is a source generation unit, 12 an encode unit for compression in MPEG, 13 a scramble unit, 14 a modulation unit, 15 a transmission antenna, and 16 a management information attaching unit. Audiovisual information generated by the source generation unit 11 comprised of a camera and a recording device is compressed in data volume by the encode unit 12 so that it can be transmitted with a less occupied bandwidth. It is transmission-encrypted by the scramble unit 13 as required to make it viewable only by particular viewers. It is then modulated into a signal suited for transmission by the modulation unit 14 before being broadcast from the transmission antenna 15 as waves to the relaying device 2. At this time, the management information attaching unit 16 adds copy control information and present time to the signal.

It is often the case that a plurality of pieces of information are multiplexed, as by time-division and spread spectrum methods, in one wave. Although not shown in Fig. 2 for simplicity, there are two or more systems of the source generation unit 11 and encode unit 12, with a multiplex unit for multiplexing a plurality of pieces of information installed between the encode unit 12 and the scramble unit 13.

### <Copy Control Information>

The copy control information controls limitations on whether copying is permitted or not and on the number of copies allowed. The copy control information is added, for example, by the management information attaching unit 16.

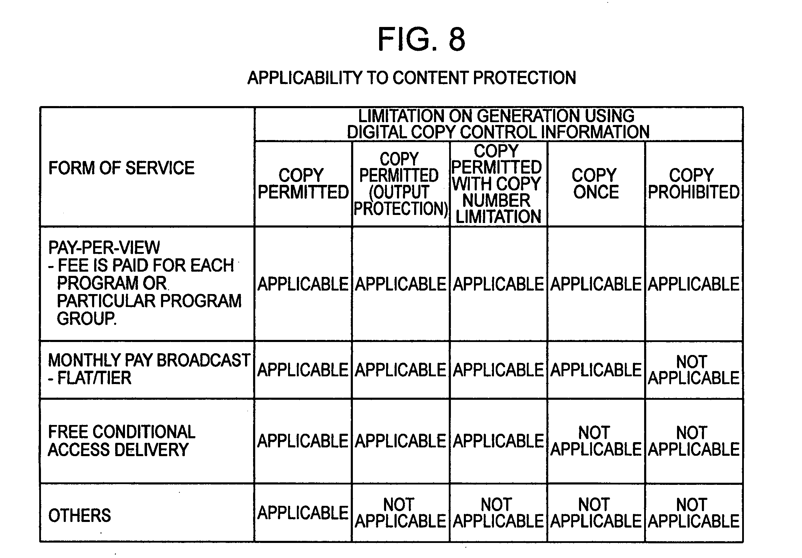

Fig. 8 is an example list of program content protections currently executed using copy control information.

"Applicable" means that a sending side can select digital copy control information as a limitation on copied content generation according to a particular type of service. For example, for a "pay-per-view" service, the table indicates that any digital copy control information may be used. For a "monthly charged broadcast", however, it is seen that the sending side cannot choose a "prohibition of copy".

As to "flat/tier", a service that provides multiple channels as in a pay broadcast is called a flat contract and a service that requires a contract for each channel is called a tier contract.

"Other than above" includes, for example, "programs that can be viewed for free, not accompanied by a content protection".

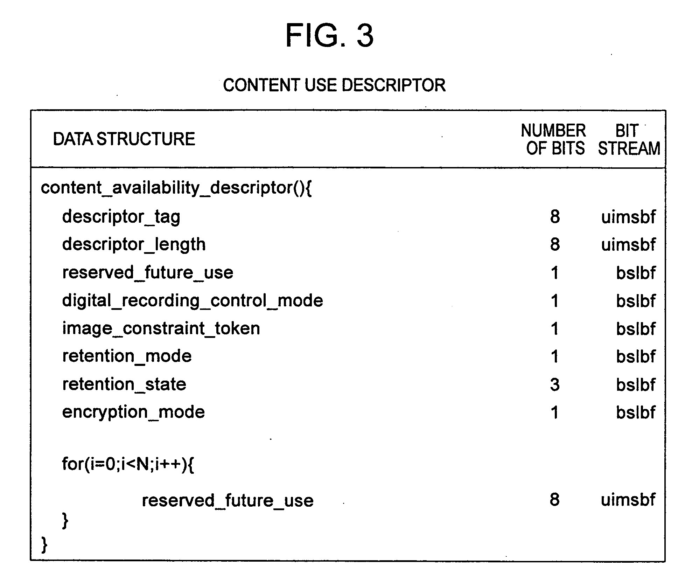

Fig. 3 shows an example structure of the content use descriptor, one of the copy control information. The content use descriptor is generated and added by, for example, the management information attaching unit 16 and stored in a PSI (Program Specific Information, such as PMT (Program Map Table)) or SI (Service Information) of MPEG-TS before being issued.

The content use descriptor is set (issued) when describing control information concerning accumulation (recording) and output of a program of interest. If a 1-bit field of digital_recording_control_mode is "1", the descriptor indicates that the program concerned can be recorded as being "copy-permitted with a copy number limitation" even if digital_recording_control_data is "Copy One Generation". If the 1-bit field is "0", the program cannot be recorded as being "copy-permitted with a copy number limitation".

The content use descriptor is set (issued) when a program of interest needs an output protection. The output protection means implementing a protection against high-speed digital interface output of content that is "copy permitted with no limiting conditions" by using an output protection bit (encryption_mode) of the content use descriptor. In other words, it does not impose any limitation as to the number of copies and the number of generations although the content is encrypted when it is output via digital interface or copied to recording media. This content use descriptor makes retransmission to Internet practically impossible. This is also called "copy free with output protection" or EPN (encryption plus non-assertion).

The content use descriptor is always set (issued) when the digital copy control information of the program concerned is "Copy One Generation" and is not covered by "copy-permitted with a copy number limitation".

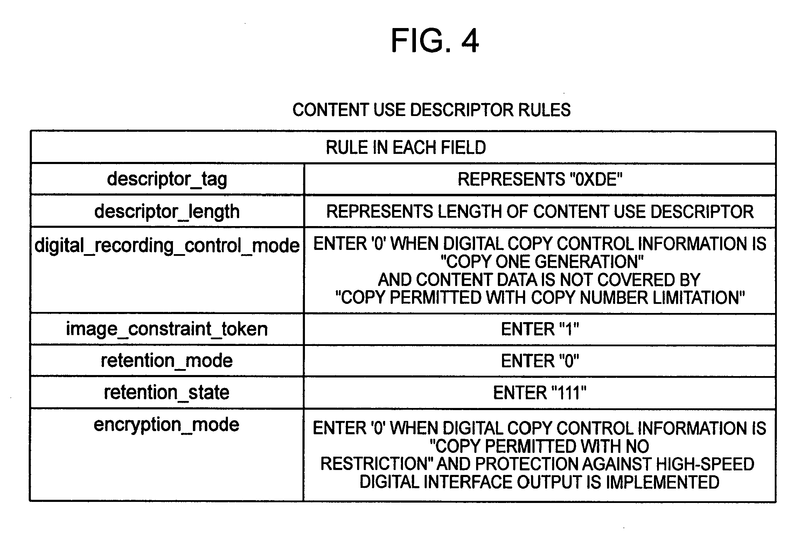

Fig. 4 illustrates an example of fields in the content use descriptor.

In "descriptor_tag" is described "0xDE" meaning the content use descriptor. A descriptor length of the content use descriptor is put in "descriptor_length". In "digital_recording_control_mode", '0' is placed when the digital copy control information is "Copy One Generation" and not covered by "copy-permitted with a copy number limitation". If the digital copy control information is "Copy One Generation" and covered by "copy-permitted with a copy number limitation", '1' is described.

If the digital copy control information is "copy permitted with no limiting conditions" and requires protection against high-speed digital interface output, '0' is described in "encryption_mode".

"retention_mode" signifies a temporary accumulation control bit which is "0" indicating that a temporary accumulation is possible even if the "digital_recording_control_data" (digital copy control information) of a digital copy control descriptor is "copy prohibited". "retention_state" means a temporary accumulation allowable time, which is "111" indicating that accumulation can be done for up to 1 hour 30 minutes. "image_constraint-token", "retension_state" and "encryption_mode" are set to "1" by default.

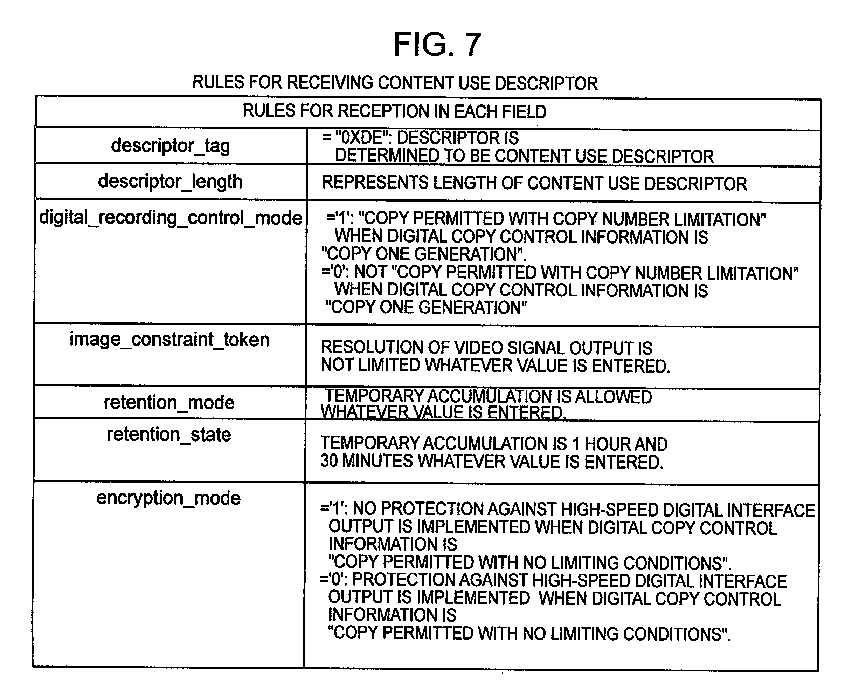

Individual fields will also be described by referring to Fig. 7 as part of processing performed on the receiving side.

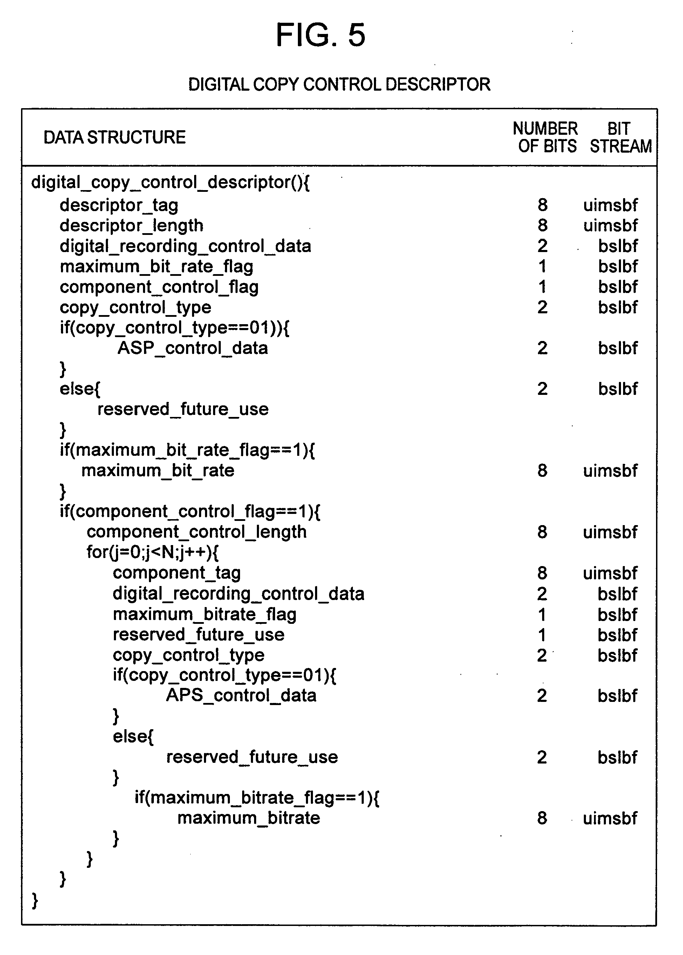

Fig. 5 shows an example structure of a digital copy control descriptor, one of the copy control information. The digital copy control descriptor is generated and added by, for example, the management information attaching unit 16 and then stored in PSI (such as PMT) or SI of MPEG-TS before being issued.

The digital copy control descriptor represents copy generation control information with a 2-bit field of "digital_recording_control_data" (digital copy control information).

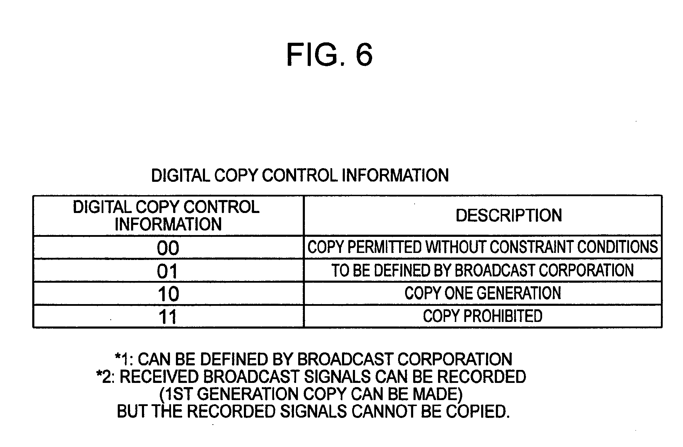

Fig. 6 shows an example of digital copy control information. When the digital copy control information is "00", it allows copy without any constraint conditions. "01" indicates that copying shall conform to a definition by a broadcasting corporation. "10" allows copying of one generation. "11" means that copying is prohibited. The one generation copy allowed means that a received broadcast signal can be recorded (copying of first generation) but that, after the recording, no copy can be made of the broadcast signal.

Content use descriptors of Fig. 3 and Fig. 4 are also called copy number control information and digital copy control information of Fig. 5 and Fig. 6 copy generation control information.

Details of processing performed by the receiver 3 in connection with the copy control information, which is sent out from the transmitter 1 and explained in Fig. 3 to Fig. 6, will be described.

Fig. 7 shows one example of processing the receiver 3 performs on individual fields of the content use descriptor.

When "descriptor_tag" is "0xDE", it is decided that the descriptor is a content use descriptor. "descriptor_length" is taken to indicate the descriptor length of the content use descriptor. If the "digital_recording_control_mode" is '1' and the digital copy control information is "one generation copy permitted", it is decided that the content is "permitted to be copied with a copy number limitation". If it is '0' and the digital copy control information is "one generation copy permitted", it is decided that the content is not "permitted to be copied with a copy number limitation". "image_constraint_token", whatever value it has, is taken not to impose any limitation on a resolution of video signal output. "retention_mode", whatever value it has, is taken to indicate that a temporary accumulation is possible. "retention_state", whatever value it has, is taken to indicate that the temporary accumulation allowable time is 1 hour and 30 minutes. If "encryption_mode" is '1' and the digital copy control information is "copy permitted with no limiting conditions", it is decided that a protection is not implemented on high-speed digital interface output. If "encryption_mode" is '0' and the digital copy control information is "copy permitted with no limiting conditions", it is decided that a protection is performed on high-speed digital interface output.

If a content use descriptor fails to be set (issued) for some reason, the fields need to be interpreted to have the following values. digital_recording_control_mode = '1', image_constraint_token = '1', retention_mode = '0', retention_state = '111', and encryption_mode = '1'.

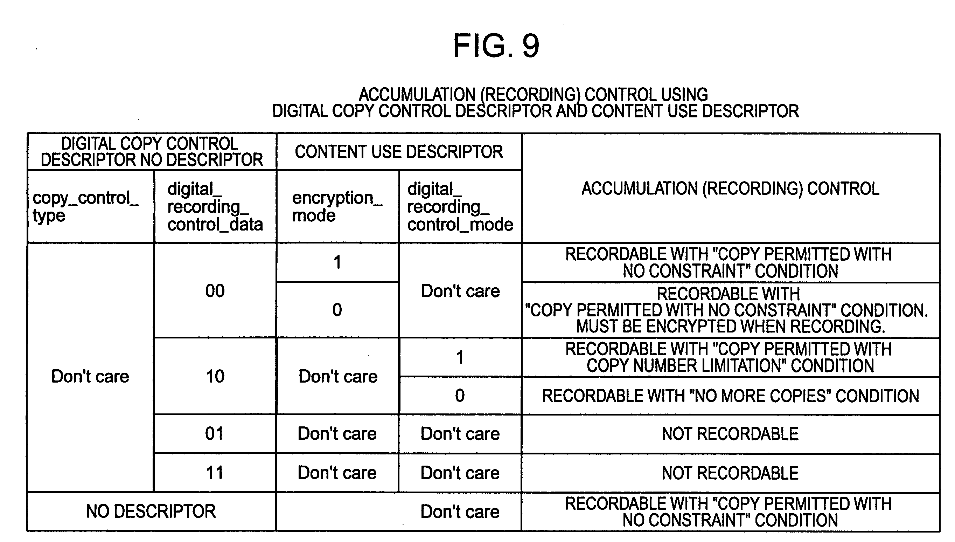

Fig. 9 shows an example control the receiver 3 performs on accumulation (recording) of program content by using the copy control information.

The example shown in Fig. 9 indicates that if, when a program content is accumulated, digital_recording_control_data of the digital copy control descriptor is '10' and "one generation copy is permitted", the accumulation is done by setting "No more copy" as the copy control information on a recording media. It is noted, however, that if digital_recording_control_mode is '1', the accumulation is done by setting "copy permitted with a copy number limitation" as the copy control information. The "copy permitted with a copy number limitation" means that a plurality of copies are allowed. If the report by the "Telecommunication Council" is approved, the number of copies that can be made of content recorded in a recording media will be set to "9" by default. If an accumulation is to be performed also with a "No more copy" condition, the value of digital_recording_control_data of the digital copy control descriptor does not need to be changed.

Further, if the digital copy control descriptor has '10' in its digital_recording_control_data and "one generation copy is permitted", a plurality of copies must not be made. However, an accumulation for backup in an area not accessible to the user is excluded. The above limitation is imposed on every broadcast receiving unit. If there are two or more broadcast receiving units, the above limitation is applied to each receiving unit.

As to a program content accumulated as being "copy permitted with a copy number limitation", N copies can be made. The value of N may conform to the associated standard. The report made by the "Telecommunication Council" gives N=9. When a copy is made through high-speed digital interface output, the copy can be made only if the number of copies made can be determined. For example, if an interface is IEEE1394 and an output destination is able to be recognized as a device compatible with the DTCP standard, the copying can be done. The copies thus produced must be in a state of "No more copy" or its equivalent.

Further, when a program content that has been accumulated as being "copy permitted with a copy number limited" is played back and output, the high-speed digital interface executes No More Copies processing defined by DTCP (Digital Transmission Content Protection) before outputting the program content. Analog video and digital audio can be output as being "one generation copy permitted".

Where the recording media is a removable recording media, another limitation is imposed in addition to Fig. 9. In digitally recording in a removable media a program content, such as TV and data service or audio service, if a program content being received and recorded has '10' in digital_recording_control_data of a digital copy control descriptor and which is "one generation copy permitted", three or more copies are not allowed even with the first generation of the received content (for example, when a broadcast program is received and recorded, it is not permitted to be recorded simultaneously in three or more recording media). This value (e.g., three or more) may conform to the standard. Further, two or more copies of content of one generation having the same recording format are not allowed to be made. It is noted, however, that a digital recording for a backup purpose in an area not accessible to the user is excluded. Further, the recording limitations on digital recording media are imposed on every broadcast receiving unit. If there are two or more broadcast receiving units, these limitations are applied to each receiving unit. If the receiving unit employs a recording system not conforming to digital_recording_control_mode, a digital recording of a program content, which has '01' in copy_control_type of the digital copy control scriptor and '10' in digital_recording_control_data, is done by handling it as being "one generation copy permitted" whatever value digital_recording_control_mode of the content use descriptor has.

### <Receiver>

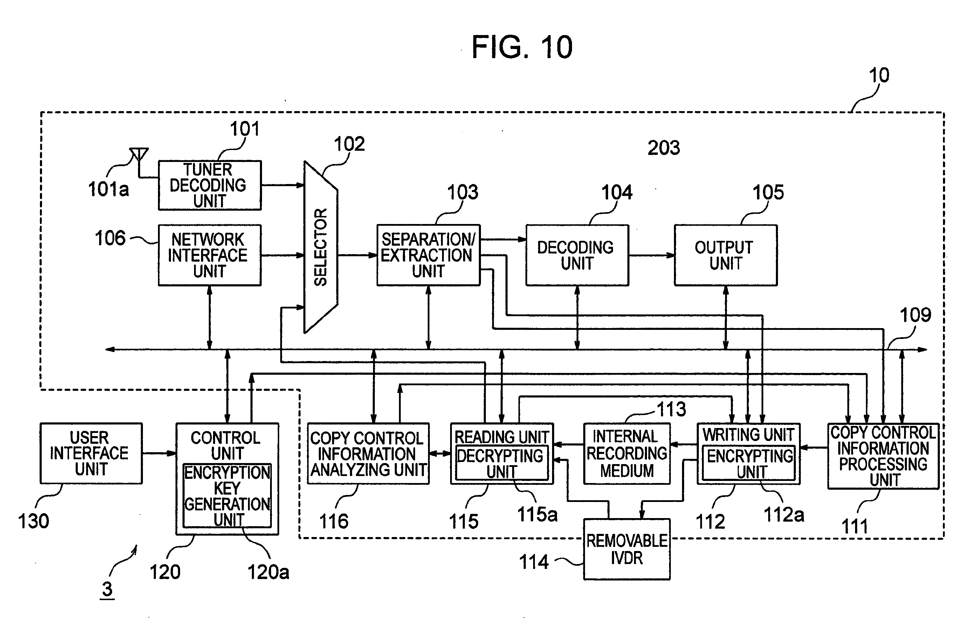

Fig. 10 is a block diagram showing an example configuration of the receiver 3 in the system of Fig. 1.

The receiver 3 is designed to receive digital broadcasts or IP (Internet Protocol) broadcasts via networks and to perform recording and playback of the received broadcasts. In the following an explanation will be given to an example case in which signals are encoded using a video compression technique of MPEG (Moving Picture Experts Group) and multiplexed by MPEG2-TS (Transport Stream) method.

The receiver 3 includes a receiving, recording and playback unit 10, a control unit 120 (e.g., CPU (Central Processing Unit)) and a user interface unit 130 (e.g., keyboard, mouse and remote control device as input devices).

Although it is shown to have individual components in the form of hardware elements, this configuration may be implemented in part by software. This configuration may also be applied to transmission and reception of video and audio content to particular users via networks, such as VOD (Video On Demand). These in general are also called a content delivery.

The control unit 120 is connected to the components of the receiver through a bus 109 and controls an overall operation of the receiver. It also receives various command signals from the user through a remote controller (not shown) of the user interface unit 130 and, based on the command signals, controls the components connected to the bus 109 to execute the requested processing. Further, the control unit 120 incorporates an encryption key generation unit 120a (more precisely, keys are generated by software). When a program content received by a tuner decoding unit 101 is recorded in an internal recording media 113 and a removable recording media 114, the encryption key generation unit 120a generates a key for encryption (a plurality of keys for one program content) as required and supplies the plurality of keys thus generated to a writing unit 112 described later through, for example, a copy control information processing unit 111.

The receiving, recording and playback unit 10 includes a tuner decoding unit 101 (receiving means), a selector 102, a separation/extraction unit 103 (e.g., demultiplexer), a decoding unit 104 (e.g., MPEG decoder), an output unit 105, a network interface unit 106, a copy control information processing unit 111, a writing unit 112, an internal recording media 113, a reading unit 115 and a copy control information analyzing unit 116. In a slot, not shown, of the receiving, recording and playback unit 10 is installed a removable recording media 114.

The internal recording media 113 (also referred to as a first recording media) and the removable recording media 114 (also referred to as a second recording media) are random-accessible recording media. Here, a hard disk drive (HDD) with a large recording capacity is used as the internal recording media 113. The removable recording media 114 in this embodiment is capable of copy control (being able to manage a plurality of copies) (and is also called "security removable media). Here, a removable iVDR is used as the copy-controllable recording media. To facilitate explanations that follow, the internal recording media 113 is called an HDD 113, the removable recording media 114 is called a removable iVDR 114, and a fixed type iVDR is used as the HDD113.

The tuner decoding unit 101 receives digital broadcast signals transmitted from a transmitter 1 through broadcast transmission networks, such as (satellite and terrestrial) radios and cables. In this example, the tuner decoding unit 101 is supposed to take in digital broadcast signals received through an antenna 101a. The tuner decoding unit 101 performs a channel selection operation and a detection on a physical or virtual channel frequency specified through a user operation unit, such as a remote controller of the user interface unit 130, and the control unit 120. Then, after subjecting the broadcast signal to a digital demodulation and an error correction, the tuner decoding unit 101 outputs the resultant MPEG2-TS (Transport Stream) to the selector 102.

The selector 102, according to the control from the control unit 120, performs a 3-input-1-output selection on the MPEG2-TS and sends its output to the separation/extraction unit 103.

The separation/extraction unit 103 separates and extracts PES (Packetized Elementary Stream) or ES (Elementary Stream) of video and audio from the transport packets of a channel (program) specified through the user operation unit, such as a remote controller of the user interface unit 130, and the control unit 120 and then outputs the extracted PES or ES to the decoding unit 104. The ES refers to individual pieces of compressed/encoded video/audio data, and the PES refers to the video ES or audio ES divided into packets of an appropriate size.

The separation/extraction unit 103 separates/extracts from the input MPEG2-TS the transport packets of a channel (program) specified through the user operation unit, such as a remote controller of the user interface unit 130, and the control unit 120 and outputs these extracted transport packets to the writing unit 112.

Further, from the transport packets of a channel (program) specified through the user operation unit, such as a remote controller of the user interface unit 130, and the control unit 120, the separation/extraction unit 103 extracts copy-related information - including copy generation control information on channels (programs) recorded in HDD13 or removable iVDR 114 and information specifying permission/non-permission of multiple copies (copy number control information) - and a title and a program start/end date and time and outputs these to the copy control information processing unit 111. These information is stored in, for example, PSI or SI information of MPEG-TS before being sent out from the separation/extraction unit 103.

The decoding unit 104 decodes the video/audio PES or ES entered from the separation/extraction unit 103 by using an input buffer and then outputs the decoded video/audio to the output unit 105.

The output unit 105 is, for example, a HDMI (High Definition Multimedia Interface) that outputs analog or digital video data/audio data to a display unit, such as CRT (Cathode Ray Tube), LCD (Liquid Crystal Display) and PDP (Plasma Display Panel), an audio output unit such as speaker, or other display devices. The output unit 105 reproduces the decoded video/audio in an output device, such as the display unit/audio output unit. Or it outputs the video/audio content data to other display devices through an output terminal (e.g., HDMI).

The network interface unit 106 is connected through communication lines (IEEE1394 cables, LAN cables and wireless transmission) to other devices that serve as destinations and input sources (recorders, displays and personal computers in a user's home or servers outside the home). Upon receiving the video/audio transport packets from the reading unit 115, the network interface unit 106 converts the transport packets into a format conforming to a transmission standard or specification and outputs them to other devices or output destinations through communication lines. It also receives video/audio data from other devices or input sources through communication lines in formats compatible to the associated transmission standards and then converts it into transport packets, which are then output to the selector 102. There may be two or more of the network interface units 106.

When it writes content into a recording media, the copy control information processing unit 111 receives a plurality of encryption keys from the control unit 120. It also analyzes the copy control information (copy generation control information and copy number control information) received from the separation/extraction unit 103 and updates it if necessary. This updating by the copy control information processing unit 111 involves replacing the copy number control information with "copyable number information" based on the copy control information, the copyable number information representing the number of copies permitted. Then, to perform a copy control on the content already recorded in a media, the copy control information processing unit 111 generates management information (hereinafter referred to as "content protection management information") correlating the copy generation control information and the copyable number information and outputs the content protection management information to the writing unit 112. Since there are two or more keys, the copy generation control information and the copyable number information are correlated with each other for each key and treated as one set to form content protection management information. That is, for each content, there are as many pieces of content protection management information as there are keys. Further, the copy control information processing unit 111 generates content management information (not shown) based on the information from the separation/extraction unit 103, such as title and program start/stop date and time, and outputs it to the writing unit 112.

In a case that a desired content recorded in HDD 113 as the first recording media is to be recorded to a removable iVDR as the second recording media (so-called dubbing) for example, the copy control information processing unit 111 receives the content protection management information (i.e., key information, copy generation control information and copyable number information) of the content to be copied that has been recorded from the reading unit 115 described later to the HDD 113 and updates it as necessary before outputting it to the writing unit 112.

The copy control information to be processed by the copy control information processing unit 111 includes the copy generation control information and the copy number control information. The copy generation control information is a 2-bit signal that may be defined as follows.
11: no copies allowed (Copy never)
01: no re-copying allowed after recording (No more copies)
10: copy in one generation is allowed (Copy one generation)
00: copiable (Copy free)
For a program content that has been recorded by the receiver 3 under the "Copy One Generation" condition, 01 for example is defined as No More Copies, not allowing content which has already been copied once under the Copy One Generation condition to be copied any more.

The copyable number information that is output from the copy control information processing unit 111 in place of the copy number control information is detailed as follows. Where the copy generation control information allows one generation copy (Copy One Generation) and the copy number control information "permits" multiple copies, the copyable number information represents the number of copies permitted when a program content that has been recorded on a "No More Copies" basis is copied to the same or different recording media in the same or different formats. If the content of a broadcast program is recorded in a recording media, the number of copies permitted is "9" by default according to the report by the "Telecommunication Council". That is, a total of nine copies plus one move operation are allowed. If the number of copies permitted N represented by the copyable number information for the content recorded in a recording media is not "0", when the content is copied to other recording media, an updated number of copies that can still be made of the content is "N-1".

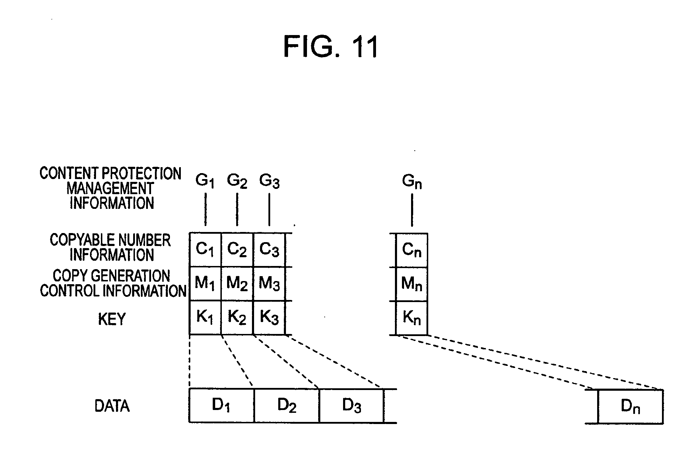

The writing unit 112 incorporates an encryption unit 112a that successively performs an encryption operation on the transport packets of a program content from the separation/extraction unit 103 according to the associated keys supplied from the control unit 120 through the copy control information processing unit 111 each time the program content supplied reaches a predetermined size. For better understanding, this operation is described to "consist in dividing program content data into blocks of specified data size and encrypting each of the blocks with an associated key Kᵢ" (described later with reference to Fig. 11). Then, encrypted data, a plurality of keys used to encrypt the program content data, and the content protection management information generated by the copy control information processing unit 111, including the copy generation control information and the copyable number information of each data block of the program content corresponding to each key, and the content management information generated by the copy control information processing unit 111 are recorded in an HDD 113 or removable iVDR 114. As a result, for a plurality of transport packets containing video/audio data of a channel (in other words, a program content or downloaded content), one stream of encrypted data is stored in the HDD 113 or removable iVDR 114 as one data file or as two or more split data files of that data file.

Fig. 11 shows an example operation of dividing data being recorded, by using a plurality of keys, according to this embodiment. As can be seen from Fig. 11, when one program content is recorded in an HDD 113 or removable iVDR 114, a plurality of keys Kᵢ (i = 1 to N) to encrypt the program content are supplied successively from the control unit 120 to the writing unit 112. The writing unit 112, when encrypting data D of the transport packets of the program content, divides the data D of one program content into data block Dᵢ of a predetermined size (e.g., less than one minute of playback duration (more specifically 45 seconds) when the data is played back at a normal speed). (More accurately speaking, the data is divided into blocks Dᵢ each time the program content data being entered reaches a predetermined size.) Then the data blocks Di are encrypted one block at a time by the associated key Kᵢ and the encrypted data blocks are recorded in a recording media. Further, the writing unit 112 records content protection management information Gi made up of a set of data (Kᵢ, Mᵢ, Cᵢ), of which Mᵢ represents updated copy generation control information of each data block Dᵢ and Cᵢ represents copyable number information, by associating the information Gᵢ with the corresponding key Kᵢ.

During the copy operation, a so-called dubbing, the content protection management information stored in a recording media is read out by the reading unit 115 described later.

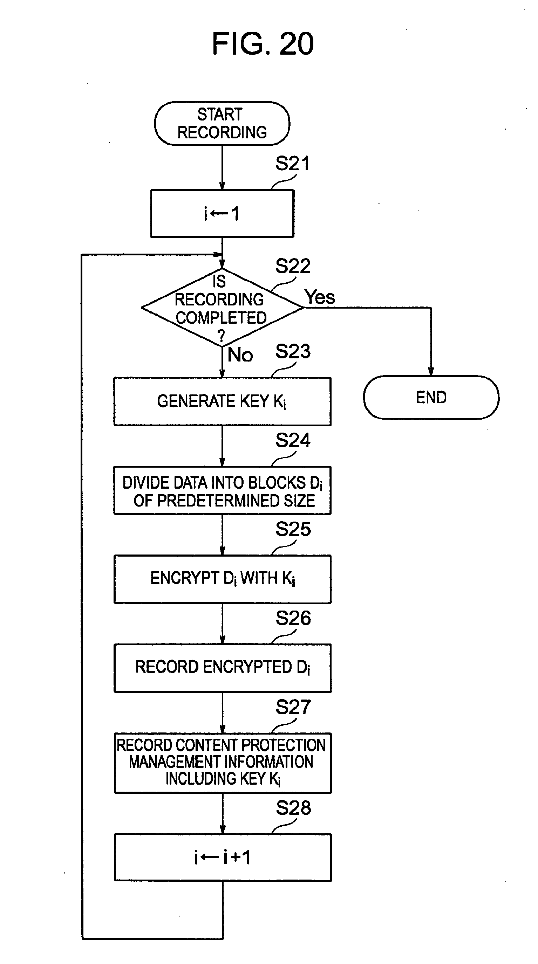

The data dividing operation shown in Fig. 11 will be described by referring to the flow chart of Fig. 20 although some explanations may overlap.

Fig. 20 is a flow chart schematically showing an example of the data dividing operation. When a program content received by the tuner decoding unit 101 begins to be recorded into the HDD 113, 1 is substituted into i to initialize the counter (S21). Then, a check is made at step S22 to see whether the recording is complete. If S22 decides that the recording is finished (Yes), the processing is ended. If not, the processing proceeds to S23 where it generates an encryption key Ki and sends it to the encryption unit 112a of the writing unit 112. Next, the program content data supplied to the writing unit 112 is divided into data blocks Dᵢ of a predetermined size (S24) which are then encrypted by the encryption unit 112a using the keys Kᵢ (S25) before being recorded in a recording media (S26). At the same time, the content protection management information (Kᵢ, Mᵢ, Cᵢ) including the key Kᵢ is also recorded in the media. Next, the i in the counter is incremented (S28) and the processing returns to S22 where it repeats the above sequence of steps until the recording is complete.

The copy control information analyzing unit 116 reads the content protection management information and content management information recorded in the HDD 113 or removable iVDR 114 through the reading unit 115 and then analyzes these information. When performing a playback, copy or move operation on a program content recorded in the HDD 113 or removable iVDR 114, the copy control information analyzing unit 116 transfers such information as program content title, program start/end date and time, copy generation control information and copyable number information to the control unit 120 so that a desired program content can be selected through the user operation unit such as a remote controller of the user interface unit 130 and the control unit 120. It also transfers decryption key information for decrypting the encrypted data to the reading unit 115.

The reading unit 115 is controlled by the control unit 120 to read the copy generation control information and the copyable number information in the content protection management information and also the content management information from the HDD 113 or removable iVDR 114 and output them to the copy control information analyzing unit 116. The copy control information processing unit 111 incorporates a decrypting unit 115a which decrypts the encrypted data read out from the HDD 113 or removable iVDR 114 by using the key information transferred from the copy control information analyzing unit 116. It then outputs the decrypted transport packets to the selector 102.

In copying (or dubbing) a desired content recorded in the HDD 113 as the first recording media to a removable IVDR as the second recording media, the reading unit 115 outputs the encrypted data of the desired content read from the HDD 113 to the writing unit 112 without decrypting it. The reading unit 115 also outputs to the copy control information processing unit 111 the content protection management information analyzed by the copy control information analyzing unit 116.

Since the receiver 3 is constructed as described above, a desired program content received by the tuner decoding unit 101 can be copy-controlled based on the copy generation control information and the copy number control information in the copy control information of the received data that corresponds to the program content, encrypted by the writing unit 112 as required and then recorded in the HDD 113 as the built-in recording media (first recording media). Further, the program content recorded in the HDD 113 can also be read by the reading unit 115 and decrypted as required and then output through the selector 102, separation/extraction unit 103 and decoding unit 104 to the output unit 105 for playback. The content recorded in the HDD 113 as the first recording media (built-in recording media) can also be dubbed (copied) to the removable iVDR 114 as the second recording media. The above series of control operations are performed by the control unit 120.

When it accumulates digital data in the HDD 113, for example, the control unit 120 performs control according to a digital copy control descriptor (copy generation control information) and a content use descriptor (copy number control information). The digital copy control descriptor comprises, for example, copy control type and digital recording control data, as shown in Fig. 5. The content use descriptor, as shown in Fig. 7, is a signal having an encryption mode and a digital recording control mode. The control unit 120 according to values of these descriptors instructs the copy control information processing unit 111 to update the copy control information of the program content data and specifies an encryption/no-encryption to the encryption unit 112a of the writing unit 112.

Before proceeding to explain the recording operation by the receiver 3, the structure of data to be recorded in a recording media will be described here.

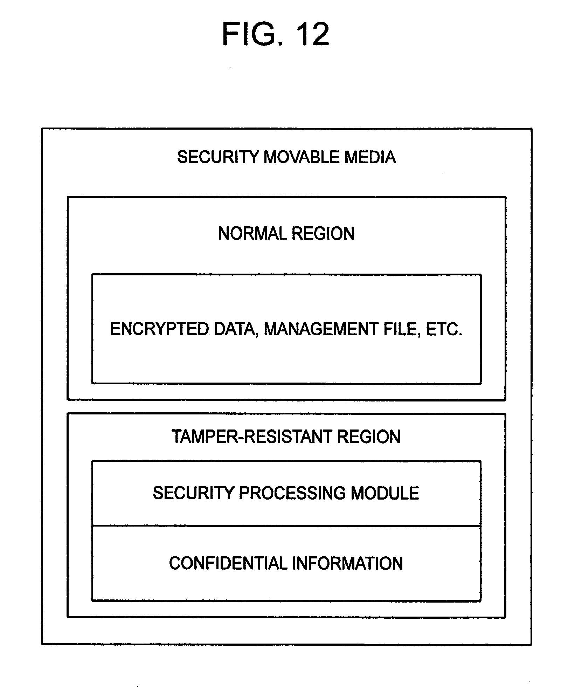

Fig. 12 shows a preferred data structure of a removable recording media according to this embodiment. This recording media is a copy-controllable recording media (security movable media) (capable of managing a plurality of copies). The copy control described here includes the copyable number information and the copy generation control information. One recording media has a normal region accessible to the user and an tamper-resistant region not accessible to the user. Security for classified information is provided by ensuring that classified information stored in the tamper-resistant region is only accessible if a device accessing the tamper-resistant region is authenticated as being authorized to handle this recording media. That is, the normal region stores encrypted data and content management information of a program. The tamper-resistant region stores a key K which is content protection management information G as classified information, copy generation control information M and copyable number information C. As described above with reference to Fig. 11, the content protection management information G corresponding to one program consists of a plurality of pieces of content protection management information Gi, each of which comprises a set of pieces of information - a key Kᵢ, copy generation control information Mᵢ corresponding to the key Kᵢ, and copyable number information Cᵢ. In this embodiment the removable recording media is formed of a removable iVDR that can manage a plurality of copies.

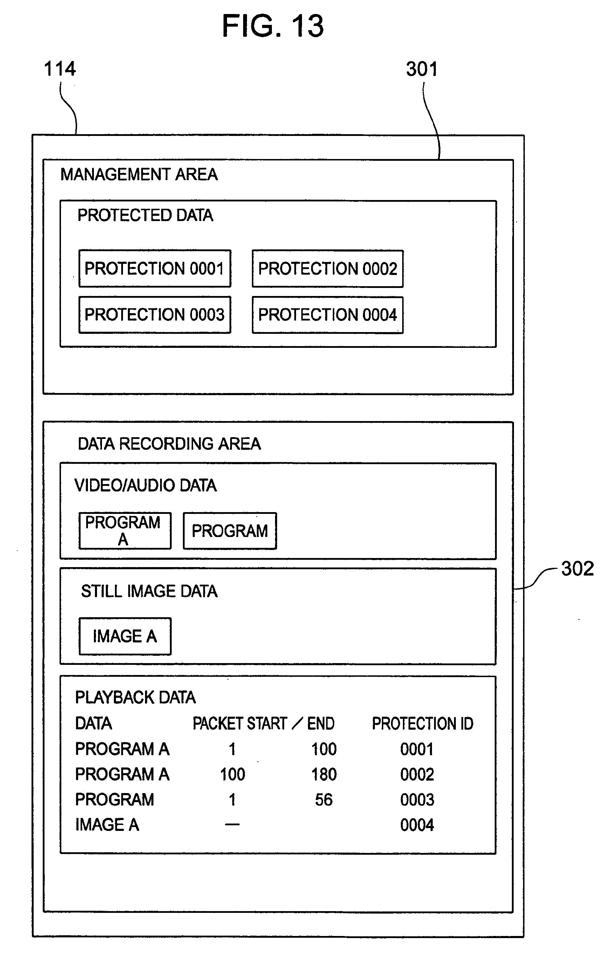

Fig. 13 shows one example of a preferred data structure in a removable iVDR. As can be seen from Fig. 13, the recording area is largely divided into a management area 301 not accessible to the user and a data recording area 302 accessible to the user through a predetermined operation. The management area 301 corresponds to the tamper-resistant region of Fig. 12. Secrecy of data can be assured by storing in the management area 301 the content protection management information G (denoted xxxx in the figure) including key data to encrypt content data before storing it in the data recording area 302. The data recording area 302 corresponds to the normal region of Fig. 12. In addition to video/audio data and still image data, the data recording area 302 stores content management information data (also called "playback data") used to check the content protection information for data in the data recording areas. In a removable iVDR 114 as the removable recording media, the copy control information as a whole may be recorded in the management area.

In the receiver 3 of Fig. 10, let us consider a case where the removable recording media 114 is not removable iVDR like those shown in Fig. 12 and Fig. 13, but recording media in which copy control information and program information can illicitly be tempered with or those not capable of copy control (those not certified by standard to conform to the copy control). When program content data is recorded in this recording media 114 (non-secure recording media), the control unit 120 instructs the copy control information processing unit 111 to set the copy generation control information to No More Copies and the copyable number information to 0.

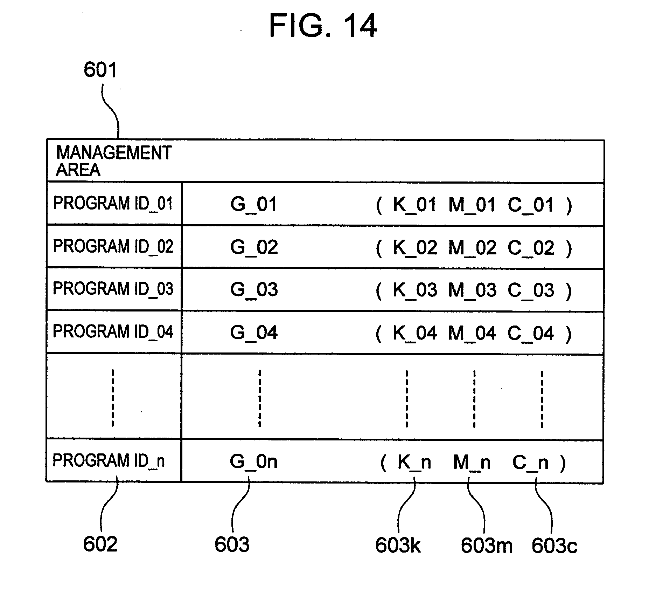

Fig. 14 shows an example of content protection management information held in a management area 601 that can keep stored information secret when data is recorded in the HDD 113 or removal iVDR 114. Denoted 602 is a program ID representing a collection of content data. A unit of collection is a range from the beginning to the end of a broadcast program or a range of the same copy control information in the same program content. Denoted 603 is content protection management information of the content (denoted G in the figure). The content protection management information 603, as shown in parentheses ( ), includes key information 603k (denoted K in the figure) corresponding to the content, copy generation control information 603m (denoted M in the figure) and copyable number information 603c (denoted C in the figure). One piece of content protection management information G_i, as described with reference to Fig. 11, comprises a plurality of pieces of content protection management information G_ij, each made up of a key K_ij, copy generation control information M_ij corresponding to the key K_ij, and copyable number information C_ij.

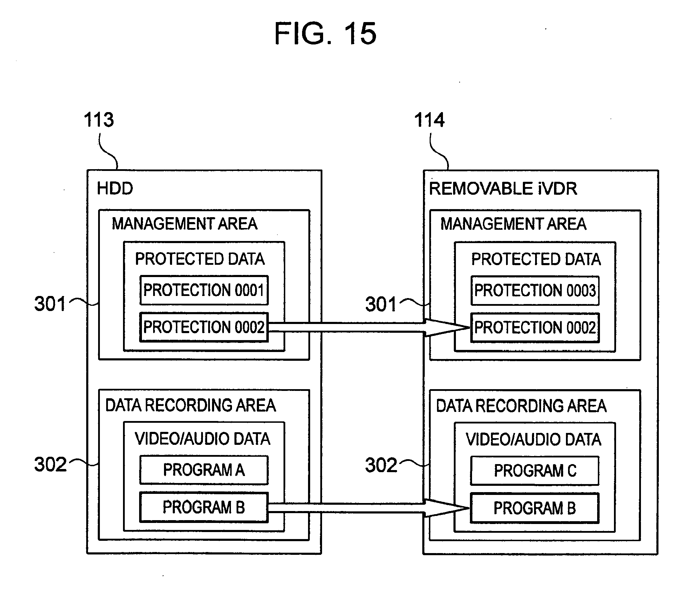

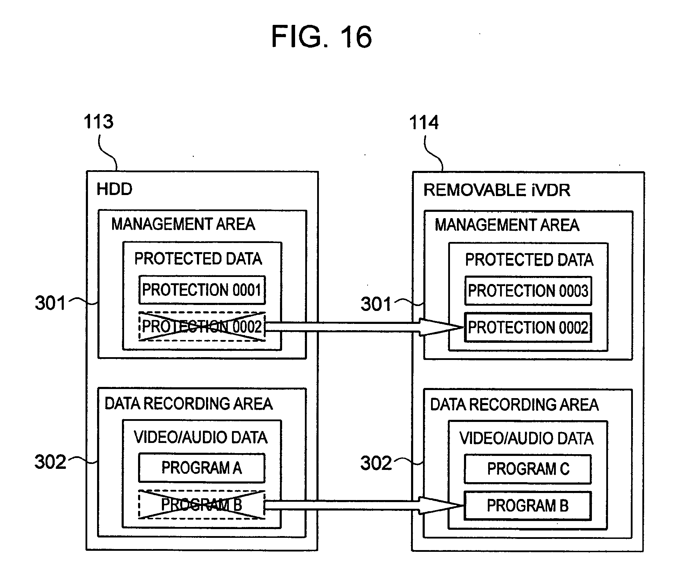

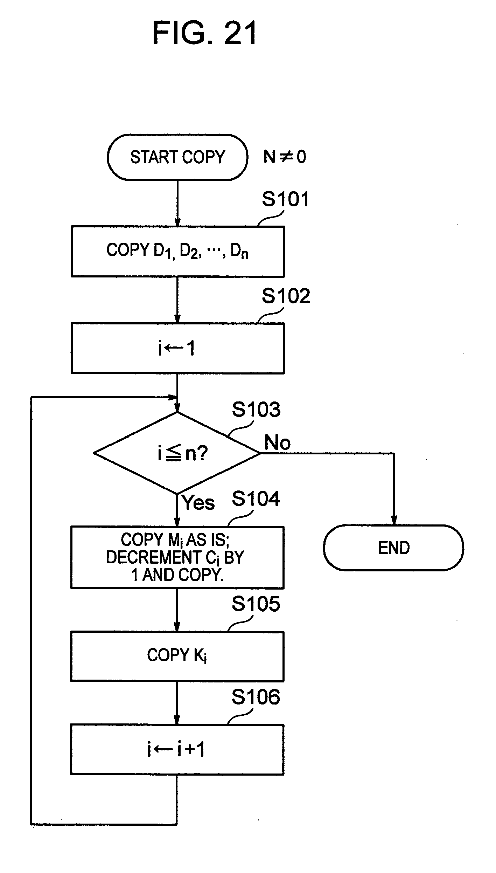

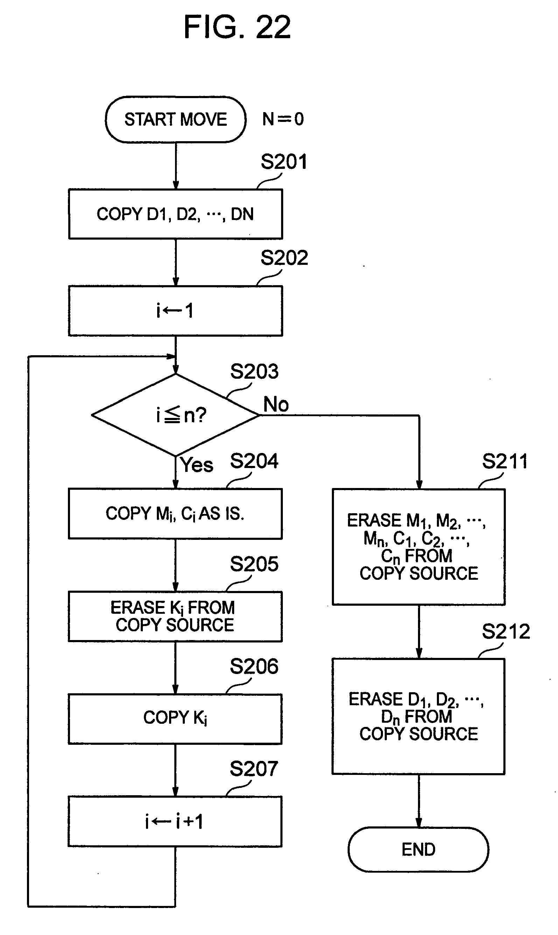

Next, referring to Fig. 15 and Fig. 16, the content dubbing operation will be schematically explained. Detailed procedures for reducing a possibility of an interruption of dubbing due to power failure will be described by referring to Fig. 21 and Fig. 22. The dubbing in this embodiment refers to both a copy operation (content remains in a copy source) and a move operation (content does not remain in a copy source).

The move operation means an operation that, after a program content of "No More Copies" recorded in a recording media has been copied to other recording media, renders the program content unplayable. Here rendering unplayable means making the content unplayable as by eliminating the program content itself or erasing the encryption key. During the process of a move operation, it is preferred that no pieces of program content lasting more than one minute not exist at the same time in both a move source and a move destination.

To prevent content from being copied to illicit device that does not conform to the copy control, authentication is performed among recording media and among recording devices before starting dubbing. The authentication procedure involves, for example, exchanging certificates (data in which device information and manufacturer information are registered) that the recording media and devices have in their management area. This is called an authentication procedure. After the authentication procedure is executed, access can be made to the management area of each other. After it has been verified by the authentication procedure that the devices concerned are not illicit ones, information of each other is exchanged.

Fig. 15 shows an example of copying content of a program. This example concerns a case where a program B having content protection information 0002 is copied from the HDD 113 as an internal recording media to the removable iVDR 114 as a removable recording media. In the figure the HDD 113, the management area 301 and the data recording area 302 are similar to those shown in Fig. 13. In executing a copy of content, the first step is to perform an authentication procedure among the recording media, after which the content is copied from the data recording area in the copy source (HDD 113) to the data recording area in the copy destination (removable iVDR 114). Then, the content protection management information is copied from the management area of the copy source to the management area of the copy destination. As a result, the content (program B) can be played both in the copy source and in the copy destination.

Fig. 16 shows an example of moving content of a program. This example concerns a case where a program B having content protection information 0002 is moved from the HDD 113 as a built-in recording media to the removable iVDR 114 as a removable recording media. The only point in which the move operation differs from the copy operation is that, in transferring the content protection management information, after the content protection management information has been written into the move destination (removable iVDR 114), the content (program B) and the content protection management information are eliminated from the move source (HDD 113) (details will be described with reference to Fig. 22). The key data is written into the recording media of the move destination after it is deleted from the recording media of the move source. (This is because there is a rule that in iVDR the key must not exist in both the recording media of the move source and the move destination simultaneously.) Although in Fig. 16 both the content and the content protection management information are eliminated from the copy source, only the key data may be eliminated as the loss of key makes the recovery of the encrypted content data impossible. As described above, the management is performed during the process of the move operation in a way that ensures that the content does not become playable in both the move source and the move destination simultaneously.

Next, the recording procedure performed in the receiver 3 will be explained by referring to a flow chart.

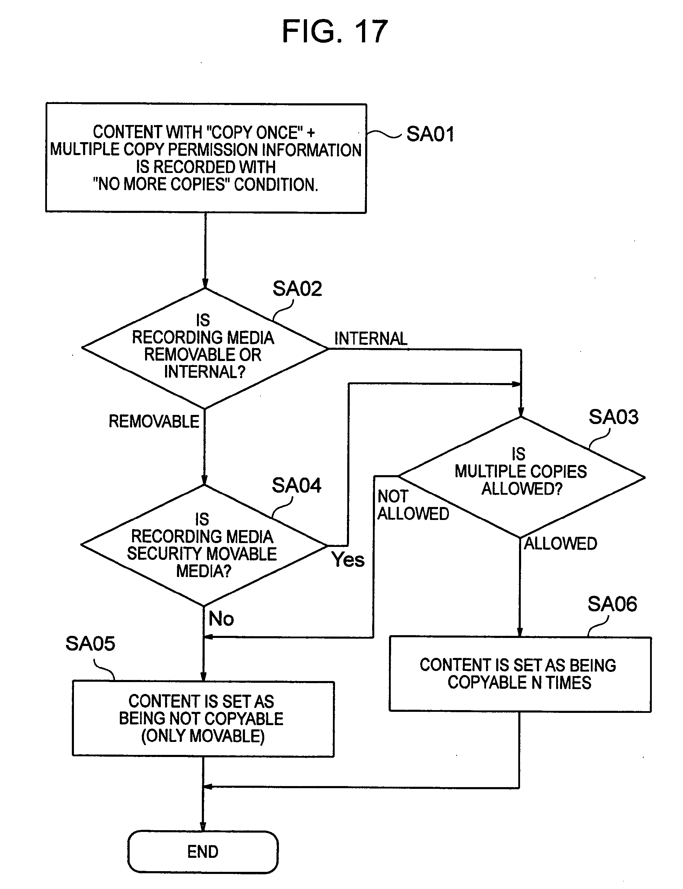

Fig. 17 is a flow chart showing an example sequence of steps for generating copy generation control information and copyable number information in a process of recording a program content with a Copy One Generation condition.

When it finds, from the copy generation control information from the separation/extraction unit 103 and the copy number control information giving permission for multiple copies, that a program content of interest is attached with a "Copy One Generation" condition and also with the copy number control information allowing/not allowing a plurality of copies, the copy control information processing unit 111 puts "01" in the copy generation control information to indicate that the content cannot be copied any more (No More Copies) and updates the information (SA01).

The control unit 120 checks whether the recording media in which to record the program content is a built-in device or a removable (SA02).

If it is found to be a removable, the control unit 120 further checks whether the removable recording media is a security removable media and notifies the check result to the copy control information processing unit 111 (SA04).

If SA04 decides that the recording media is a removable but not a security removable media, the copy control information processing unit 111 puts "0" in the copyable number information to specify that the program content cannot be copied but is movable (SA05). In connection with the limiting condition on the removable recording media explained in Fig. 9 which does not allow copying to three or more media, the above operation is a copy control performed as a broadcast program is received and recorded (first generation copy is being copied) whereas the explanation of Fig. 17 concerns a copy control performed after the program has been recorded in a recording media (first generation copy has been generated).

If the recording media is a built-in or security removable media, the copy control information processing unit 111 checks if the copy number control information indicating a permission or non-permission for multiple copies reads "copy permitted" or "copy not permitted" (SA03).

If SA03 finds that the copy number control information is "copy not permitted", the processing moves to SA05 where, for example, it puts "0" in the copyable number information to make the program content not copyable but movable. It is of course possible to eliminate the content.

If SA03 finds that the copy number control information is "copy permitted", the copy control information processing unit 111 enters "N" in the copyable number information to make the program content copyable N times (SA06). According to the report by the "Telecommunication Council", N=9 by default.

The above procedure allows a recorded program content with Copy One Generation to be copied two or more times without being restricted by time limitations, improving the ease of use. Further, a multiple copy permission decision making may be based on whether the recording media is internal or removable and, if found removable, on whether it is a security removable media. For internal or security removable media, the program content may be subjected to local encryption as described above and further content protection management information comprising key information, copy generation control information and copyable number information of the program content may also be encrypted and managed thus protecting against illicit tampering.

### <Copy Operation Associated With Copy Control

### Information>

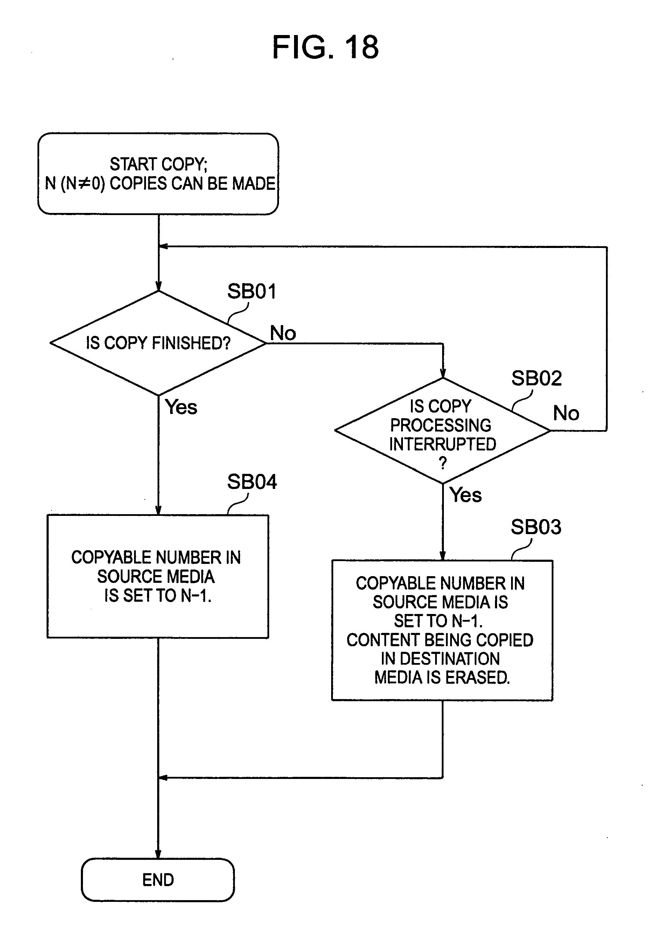

Fig. 18 is a flow chart showing a sequence of steps the receiver 3 performs to copy a program content.

In a process of copying a program content with the copy generation control information of "01" (No More Copies) and copyable number information of "N" (N≠0), a check is made as to whether the copy operation is finished (SB01).

When it is found that the copy operation is finished, "N-1" (N≠0) is put in the copyable number information of the copy source recording media to make the program content copyable N-1 times. "01" (No More Copies) is entered in the copy generation control information of the copy destination recording media to prohibit the program content from being copied again and "0" is entered in the copyable number information to make the program content not copyable but movable (SB04). It is noted that the copy generation control information is, as described above, not updated.

If the copy operation is found not finished, whether the copy operation is interrupted is monitored (SB02). If the copy operation is not interrupted, whether the copy operation is finished is monitored (SB01).

If the copy operation is found interrupted, "N-1" (N≠0) is entered in the copyable number information of the copy source recording media to make the program content copyable N-1 times. If a copy destination recording media can record a plurality of copies, the program content whose copy operation was interrupted is deleted (SB03). It is noted, however, that for a recording media capable of recording only once, the content whose copy operation was interrupted cannot be deleted and so the deletion operation is not performed.

The above process offers an effect of being able to secure a reliable management of a program content copy generation in a copy destination media. In the event that a copy operation is interrupted by some causes, this process does not leave unnecessary program content in the copy destination media, eliminating the need to erase the unwanted content later, improving the ease of use. The content erasure may be done either by physically deleting data on the recording media or by deleting the content protection information to render the playback of the data impossible although the data remains on the recording media (indirectly deleting the content).

### <Move Operation Associated With Copy Control

### Information>

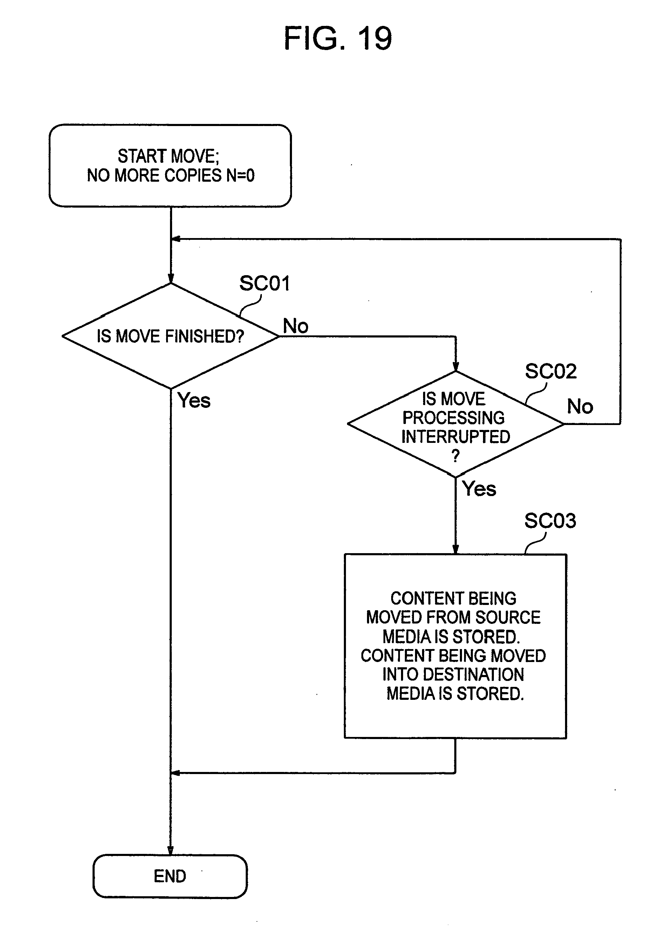

Fig. 19 is a flow chart showing a sequence of steps the receiver of the embodiment performs to move a program content.

During the process of moving a program content with the copy generation control information of "01" (No More Copies) and the copyable number information of "0", a monitoring is made of whether the move operation is finished (SC01).

If the move operation is found to have been completed, the program content and the content protection management information concerning the program content are deleted from a move source recording media and "01" (No More Copies) is entered in the copy generation control information of a move destination recording media to prohibit any more copies of the program content and "0" is also entered in the copyable number information to make the program content not copyable but movable. The copy generation control information and the copyable number information are, as described above, not updated.

If the move operation is found not completed, a monitoring is made as to whether or not the move operation is interrupted (SC02).

If the move operation is found not interrupted, whether the move operation is completed or not is monitored (SC01).

If the move operation is found interrupted, that part of the program content which is being moved from the move source recording media and has not yet moved to the move destination recording media and also the content protection information related to this program content are stored. The other part of the program content which has already been moved to the move destination recording media is made incapable of being played. The program content being moved to the move destination recording media is stored; "01" (No More Copies) is entered in the copy generation control information to protect the program content against further copying; and "0" is entered in the copyable number information to make the program content not copyable but movable (SC03).

The above process offers an effect of securing a reliable management of a program content copy generation in a move destination media. In the event that a move operation is interrupted by some causes, this process leaves the program content in both the move source media and the move destination media, eliminating the possibility of the program content being rendered not viewable by the interruption, improving the ease of use. The content erasure may be done either by physically deleting data on the recording media or by deleting the content protection information to render the playback of the data impossible although the data remains on the recording media (indirectly deleting the content).

In the above explanation, the recording media of the copy destination or move destination is one that can be managed as having a No More Copies condition. If it cannot be managed, the copy or move operation is prohibited.

Although in the above we have described an example case of program content broadcast from a broadcast station, the same procedure is also applicable to other program content supplied from, for example, program content providers.

In Fig. 18 and Fig. 19 the procedures for recording into a recording media and for copying and moving between recording media have been described to focus on the copy generation control information and the copyable number information. Next, a copying (dubbing) or moving procedure will be explained which is intended to reduce a chance of interruption of the copying or moving operation in the event of a power failure.

Fig. 21 is a flow chart of a procedure intended to reduce a chance of interruption of a copy (dubbing) operation in the event of a power failure. Fig. 22 is a flow chart of a procedure intended to reduce a chance of interruption of a move operation in the event of a power failure. The procedure of Fig. 21 will be explained first.

Let us consider a case in which a desired content recorded in the HDD 113 is to be copied (more precisely dubbed) to a removable iVDR 114. It is assumed that the desired content data D to be copied which is recorded in the HDD 113 is divided, before being recorded, into a plurality of blocks Di (i = 1∼n) corresponding to a plurality of keys Kᵢ . The content protection management information of the desired content recorded in the HDD 113 is read by the reading unit 115 and analyzed by the copy control information analyzing unit 116. If the number of copies permitted N represented by the copy number control information is not "0", it is decided that the dubbing can be made. When the copying (dubbing) operation under this condition is started, the reading unit 115 at S101 first reads the desired content data (D₁, D₂, ..., Dₙ) from the copy source HDD 113 and sends them to the writing unit 112 to copy (dub) the content data to the copy destination removable iVDR 114. Then the reading unit 115 sets i=1 in the counter (S102). Next, a check is made to see if i is n or less (including n) (S103). If the decision of S103 is No, it means that the copying (dubbing) of the content protection management information Gᵢ (key Kᵢ, copy generation control information Mᵢ and copyable number information Cᵢ) has arrived at the last data. So the copying (dubbing) operation is ended. If the decision of S103 is Yes, the processing proceeds to S104. S104 sends the content protection management information Gᵢ analyzed by the copy control information analyzing unit 116 from the reading unit 115 to the copy control information processing unit 111. The copy control information processing unit 111 now decrements by 1 the number of copies permitted Nᵢ represented by the copyable number information Cᵢ and sends the content protection management information, without updating the copy generation control information Mᵢ, to the writing unit 112 for copying to the removable iVDR 114. Then, it copies the key data Kᵢ of the content protection management information Gᵢ (S105). Next, i of the counter is incremented by one (S106) and the processing of S104 and S105 is repeated until there is no content protection management information.

As described above, since the copy (dub) operation according to this embodiment first performs the copying (dubbing) of the content data D before copying the content protection management information G, the period of time taken by the copying of the content protection management information G can be made shorter than in the conventional technology, which in turn reduces the chance of a power interruption caused by power failures occurring during the copy operation. In the event of a power interruption due to power failures during the copy operation of the content data D, because the decryption key information has not yet been sent out at this stage, it is possible, after a power recovery, to restore the content data whose copy operation has been interrupted, without consuming the copy operation number available. At this point in time, since the key is put in one of the recording media (here, HDD 113), there is no problem if the content data are present in both media.

Further, in this embodiment, Mᵢ and Cᵢ are first copied before Kᵢ is copied. Thus, if a copy interruption should occur as a result of a power failure during the copying of Mᵢ and Cᵢ, since the key Kᵢ has not yet been sent out, Mᵢ or Cᵢ data whose copy operation has been interrupted can be restored after a power recovery, without consuming the copy operation number available. However, if a power failure should occur while the key Kᵢ is read out, because the key Kᵢ data stored in the HDD 113 is taken out after the power recovery, one of the copy operation number available is consumed.

As described above, in this embodiment, during a copy (dub) operation the content data is first copied, followed by the successive copying of individual sets of content protection management information Gᵢ (key, copy generation control information and copyable number information) each corresponding to the associated one of data blocks Dᵢ, into which the content data is divided. This significantly shortens the time spent copying the key, greatly reducing the chance of the number of copy operations available being wasted by a power interruption due to power failure during the copy operation.

A flow chart of Fig. 22 for a move operation will be described.

The content protection management information of the desired content recorded in the HDD 113 is read by the reading unit 115 and analyzed by the copy control information analyzing unit 116. If the number of copies permitted N represented by the copy number control information is "0", it is decided that the copy is a move operation. When the move operation under this condition is started, the reading unit 115 at S201 first reads the desired content data (D₁, D₂, ..., Dₙ) from the move source HDD 113 and sends them to the writing unit 112 to copy (move) the content data to the move destination removable iVDR 114. Then the reading unit 115 sets i=1 in the counter (S202). Next, a check is made to see if i is n or less (including n) (S203). If the decision of S203 is Yes, the processing moves to S204. S204 sends the content protection management information Gᵢ analyzed by the copy control information analyzing unit 116 from the reading unit 115 to the copy control information processing unit 111 (i.e., the content protection management information Gᵢ is stored in a memory not shown in the copy control information processing unit 111). Then the copy control information processing unit 111 sends the copy generation control information Mᵢ and copyable number information Cᵢ as is, without updating them, to the writing unit 112 for copying to the removable iVDR 114. Next, the key data Kᵢ is erased from the HDD 113 (S205) and copied to the removable iVDR 114 (S206). Next, i of the counter is incremented by one (S207) and the processing returns to S203 where it repeats steps S204 to S207 until there is no more content protection
management information.

If the decision of S203 is No, it means that the copying (moving) of the content protection management information Gᵢ has reached the last data. So the processing moves to S211. S211 erases the copy generation control information Mᵢ and copyable number information Cᵢ (i = 1, 2, ..., n) from the copy (move) source recording medium, HDD 113. Then, Dᵢ (i = 1, 2, ..., n) is deleted from the copy (move) source before ending the move operation.

While the processing of Fig. 22 has been described to delete the copy generation control information M, copyable number information C and content data D from the copy (move) source, these information may not necessarily be deleted because the associated key data Kᵢ is already erased and the content data cannot be decrypted. It is of course preferable to delete them in terms of increasing the available capacity of the recording media. It is also possible to erase the copy generation control information Mᵢ and copyable number information Cᵢ after the step S204. However, to shorten the erasure time, it is desirable to perform the erase operations at one time as in step S211.

As described above, in the copy (move) operation according to this embodiment, the content data D is first copied (dubbed) before the content protection management information G is copied (moved). This procedure can make the period of time spent copying the content protection management information G shorter than in the conventional technology, which in turn reduces the chance of the copy operation being interrupted as by a power failure. With this procedure, since the decrypting key information has not yet been read out at this stage, even if a power shutdown due to a power failure should occur, the content data whose copy operation has been interrupted can be recovered after the power is restored.

Further in this embodiment, Mᵢ and Cᵢ are copied (moved) before Kᵢ is copied (moved). If the copying (moving) of Mᵢ and Cᵢ is interrupted as by power shutdown during the process, since the key Kᵢ has not yet been sent out, it is possible, after a power restoration, to recover Mᵢ or Cᵢ data whose copy operation has been interrupted.

As described above, the move operation according to this embodiment first copies the content data before successively copying (moving) individual sets of content protection management information Gᵢ (encryption key, copy generation control information and copyable number information) corresponding to the associated pieces of the data blocks Dᵢ, into which the content data is divided. This procedure significantly shortens the period of time taken to copy (move) the key, which in turn greatly reduces the chance of the key being lost as a result of interruption of the copy (move) operation caused by a power interruption due to a power failure.

Although in the above embodiment the copy generation control information Mᵢ and copyable number information Cᵢ are included in the content protection management information Gᵢ corresponding to the key Kᵢ, the copy generation control information Mᵢ is not necessarily be managed in matching relationship with the key Kᵢ since it is the same over the entire program content. It may therefore be managed to match the program content. It is noted, however, that since there is a case where a part of the program content recorded in the HDD 113 is copied to a removable iVDR, the copyable number information Cᵢ needs always to be managed in matching relationship with the key Kᵢ.

Further, in the event of a copy (move) interruption due to a power failure, or in the event of a partial copy, a case may arise in which parts with differing copyable numbers exist in one and the same content recorded in a recording medium. In such a case, the minimum copyable number is taken as the copyable number for the entire content. For example, whether the operation to be performed is a move operation or not is decided depending on the minimum copyable number that the content has.

Although the above descriptions have centered on the copy and move operations between different recording media, this invention is not limited to this case but may be applied to a data move operation within the same recording media.

While in the above the first recording media has been described to be an internal recording media, this invention is not limited to this configuration and the first recording media may also be a removable recording media.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A recording apparatus comprising:
a receiving unit (101) to receive content data and information related to a copying of the content data;
a separation/extraction unit (103) to separate and extract the content data and the information related to the copying of the content data, both received by the receiving unit;
a writing unit (112) to divide the content data extracted by the separation/extraction unit into a plurality of pieces of data and write them in a first recording medium (113);
an encryption key generation unit (120a) to generate an encryption key for encrypting each of the plurality of pieces of data; and
a copy control information processing unit (109) to generate, from the information related to the copying and the generated encryption key, a plurality of pieces of content protection management information for the plurality of pieces of data;
wherein when the content data written into the first recording media is recorded into a second recording media (114), the plurality of pieces of data are recorded before the plurality of pieces of content protection management information are recorded.

2. A recording apparatus according to claim 1, wherein the content protection management information comprises:
encryption keys to encrypt each of the plurality of pieces of data;
copy generation control information to control copy generation; and
copyable number information representing the number of copies that can be made of the plurality of pieces of data.

3. A recording apparatus according to claim 2, further including a control unit to control the recording of the content data from the first recording media to the second recording media by using the copy generation control information and the copyable number information.

4. A recording apparatus according to claim 3, wherein, when the copyable number information is one or more, the control unit does not update the copy generation control information but decrements the copyable number information by one and controls to record the content data from the first recording media to the second recording media.

5. A recording apparatus according to claim 3, wherein, when the copyable number information is 0, the control unit erases the encryption keys corresponding to the plurality of pieces of data from the first recording media before erasing the copyable number information.

6. A recording apparatus according to claim 3, wherein, when the copyable number information is 0, the control unit erases the encryption keys corresponding to the plurality of pieces of data from the first recording media before recording the encryption keys to the second recording media.

7. A recording apparatus according to claim 1, wherein the first recording media is a recording media built into the recording apparatus and the second recording media is a recording media removable from the recording apparatus.

8. A recording apparatus according to claim 1, wherein the second recording media is a security removable media capable of copy control.

9. A recording method comprising:
a receiving step to receive content data and information related to a copying of the content data;
a separation/extraction step to separate and extract the content data and the information related to the copying of the content data, both received by the receiving unit;
a writing step to divide the content data separated and extracted by the separation/extraction step into a plurality of pieces of data and write them in a first recording medium;
an encryption key generation step to generate an encryption key for encrypting each of the plurality of pieces of data; and
a step to generate, from the information related to the copying and the generated encryption key, a plurality of pieces of content protection management information for the plurality of pieces of data;
wherein when the content data written into the first recording media is recorded into a second recording media, the plurality of pieces of data are recorded before the plurality of pieces of content protection management information are recorded.
